## Europäisches Patentamt
## European Patent Office
## Office européen des brevets

(19)

(11) Veröffentlichungsnummer: **0 116 120**
**B1**

(12) **EUROPÄISCHE PATENTSCHRIFT**

(45) Veröffentlichungstag der Patentschrift:
**19.02.86**

(21) Anmeldenummer: **83110535.8**

(22) Anmeldetag: **21.10.83**

(51) Int. Cl.⁴: **F 16 K 11/085, B 65 G 53/56**

(54) **Rohrverzweigung mit Umschaltklappe.**

(30) Priorität: **23.12.82 DE 3247817**

(43) Veröffentlichungstag der Anmeldung:
**22.08.84 Patentblatt 84/34**

(45) Bekanntmachung des Hinweises auf die Patenterteilung:
**19.02.86 Patentblatt 86/8**

(84) Benannte Vertragsstaaten:
**AT BE CH DE GB LI LU NL SE**

(56) Entgegenhaltungen:
**AU - B - 444 986**
**DE - B - 1 810 355**
**FR - A - 2 276 523**
**US - A - 553 785**

(73) Patentinhaber: **Sallhofer, Hans, Dr., Bahnhofstrasse 36,
A-5280 Braunau (AT)**

(72) Erfinder: **Sallhofer, Hans, Dr., Bahnhofstrasse 36,
A-5280 Braunau (AT)**

(74) Vertreter: **Glawe, Delfs, Moll & Partner Patentanwälte,
Postfach 26 01 62 Liebherrstrasse 20,
D-8000 München 26 (DE)**

## Beschreibung

Die Erfindung betrifft eine Rohrverzweigung mit Umschaltklappe, insbesondere einen Klappkasten für Mahlgutleitungen in Mühlenanlagen, von der im Oberbegriff des Anspruchs 1 angegebenen Art.

Bei einem bekannten Klappkasten dieser Art hat die Querwand der Klappmulde eine zu ihrer Vorderseite parallele, also ebenfallstangential zur Drehachse verlaufende Rückseite, und von dieser Rückseite her sind die die Wellenzapfen umgebenden spaltförmigen Zwischenräume zwischen den seitlichen Wangen der Klappmulde und der Innenwand des Gehäuses frei zugänglich. Es hat sich gezeigt, dass sich in diesen Bereichen das durch die Rohrverzweigung geförderte Mahlgut od. dgl. festsetzen und festbacken kann, so dass der Klappkasten mit der Zeit blockieren oder schwergängig werden kann. Auch kann dieses festgesetzte Mahlgut mit der Zeit verderben und dann wieder in den Gutstrom gelangen, wodurch das Mahlgut schädliche Beimischungen erhalten kann. Ein weiterer Nachteil des bekannten Klappkastens besteht darin, dass die die Klappmulde in die beiden Endstellungen drückende Feder an der Aussenseite des Klappkastens angeordnet ist, wo sie verschmutzen, korrodieren oder beschädigt werden kann, und dass durch diese Federanordnung eine exzentrische Kraft auf den Wellenzapfen der Klappmulde und sein gehäuseseitiges Drehlager ausgeübt wird, so dass häufiges Umschalten des Klappkastens zu einer einseitigen Abnutzung des Lagers führen kann.

Der Erfindung liegt die Aufgabe zugrunde, einen Klappkasten der angegebenen Art so zu verbessern, dass die Gefahr eines Festsetzens von Mahlgut od. dgl. Fördergut insbesondere in den die Wellenzapfen umgebenden Lagerzwischenräumen weitgehend ausgeschlossen ist, und dass ausserdem eine verbesserte und geschütztere Ausgestaltung der Federanordnung ermöglicht wird.

Die erfindungsgemässe Lösung dieser Aufgabe ist im Anspruch 1 angegeben. Vorteilhafte weitere Ausgestaltungen sind in den Unteransprüchen angegeben.

Durch die zur Drehachse konzentrisch kreisförmige Ausgestaltung der Wangen füllt deren kreisrund umlaufender Rand die zugehörigen kreisförmigen Vertiefungen des Gehäuses derart abdichtend aus, dass in den spaltförmigen Zwischenraum zwischen jeder Wange der Klappmulde und der zugehörigen Gehäuseseitenwand kein Mahlgut eindringen kann. Hierdurch ist die Möglichkeit geschaffen, diesen Raum zwischen den Seitenwänden der Klappmulde und den Gehäuseseitenwänden als geschützten Unterbringungsraum für die Federanordnung auszugestalten. Wenn jeder der beiden Wangen der Klappmulde eine Federanordnung zugeordnet ist, und wenn jede dieser Federanordnungen wiederum aus zwei symmetrisch zur Achse angeordneten Biegefedern besteht, mit denen symmetrisch zur Drehachse angeordnete Nocken der Klappmulde zusammenwirken, dann werden auf die Wellenzapfen und ihre Lager keinerlei queraxiale Kräfte von der Federanordnung

ausgeübt, so dass die Lager nicht einseitig belastet werden und sich nicht einseitig abnutzen können.

Eine Ausführungsform der Erfindung wird anhand der Zeichnungen näher erläutert.

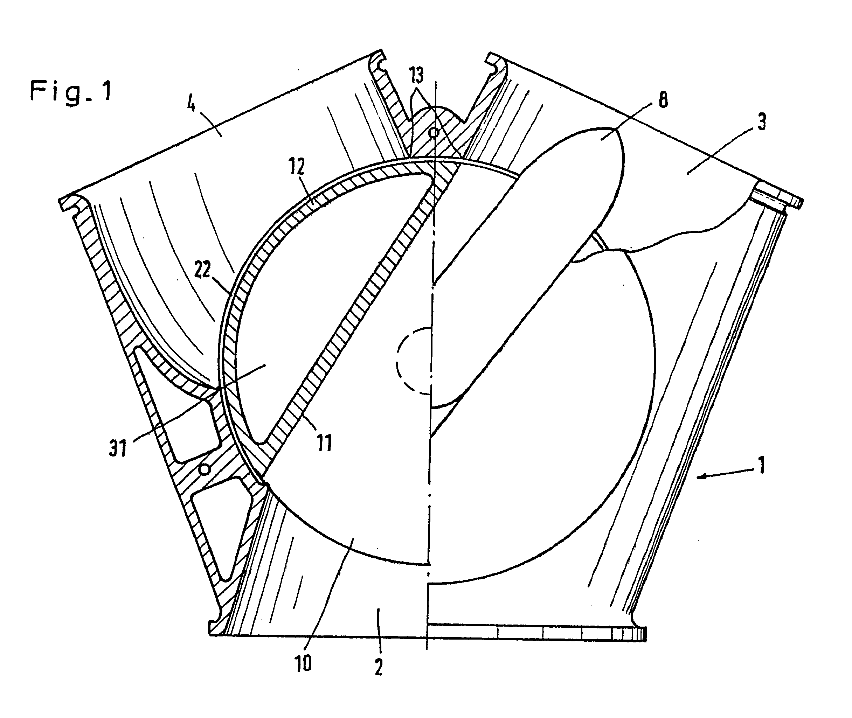

Fig. 1 zeigt eine Frontansicht eines auf den Kopf gestellten Klappkastens, teilweise im Schnitt;

Fig. 2 zeigt eine perspektivische Ansicht des Klappkastens mit auseinandergenommenem Gehäuse;

Fig. 3 zeigt eine schematische Ansicht einer Federanordnung in zwei Betriebsstellungen.

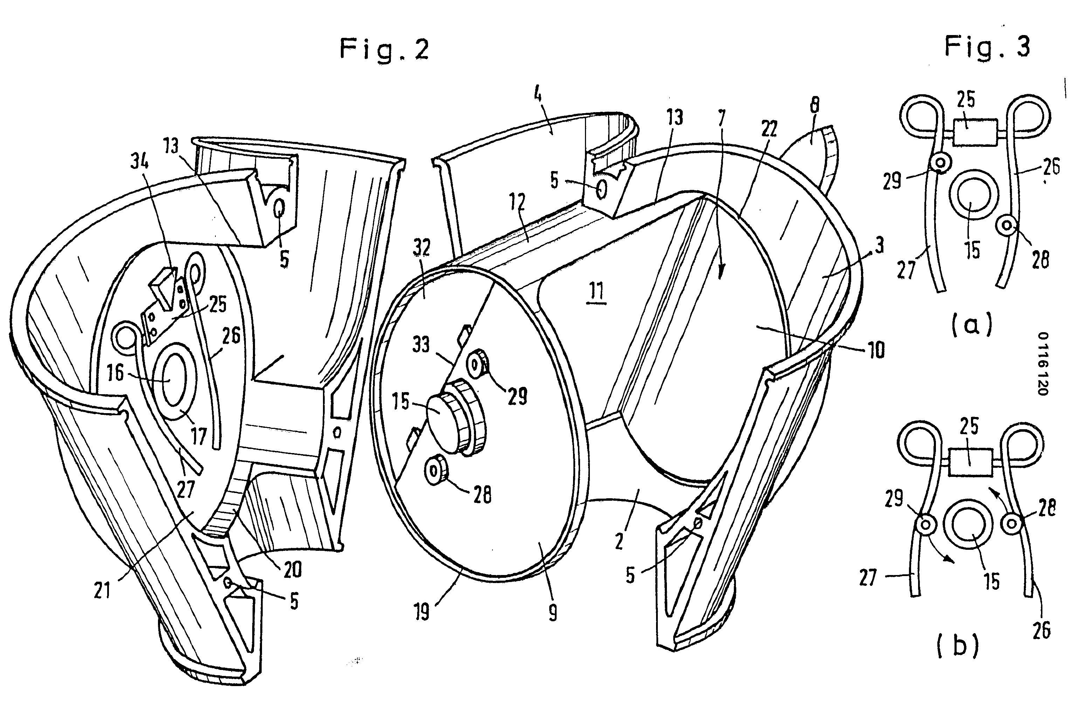

Der dargestellte Klappkasten hat ein Gehäuse 1 mit einem Einlassstutzen 2 und zwei zueinander im spitzen Winkel stehenden, eine Rohrverzweigung bildenden Auslassstutzen 3, 4. Bei Einbau in die Mahlgutleitungen von Mühlenanlagen wird der Klappkasten entsprechend dem in der Regel von oben nach unten fallenden Gutstrom so eingebaut, dass der Einlassstutzen 2 nach oben gerichtet ist. Das Gehäuse besteht, wie aus Fig. 2 ersichtlich, aus zwei symmetrischen Gehäusehälften, die z.B. mittels Schrauben, die sich durch die hierfür vorgesehenen Bohrungen 5 erstrecken, verbunden sind.

Um den durch den Einlassstutzen 2 eintretenden Gutstrom wahlweise in den einen oder anderen Auslassstutzen 3, 4 zu lenken, ist in dem Gehäuse 1 eine Klappmulde 7 um eine Achse, die senkrecht zur gemeinsamen Ebene der Achsen der Stutzen 2, 3, 4 verläuft, drehbar gelagert und kann mittels eines von aussen zugänglichen Handgriffes 8 zwischen zwei Endlagen geschwenkt werden, in denen sie jeweils einen der Auslassstutzen 3, 4 freigibt und den anderen verschliesst. Der Handgriff 8 ist so ausgebildet und angeordnet, dass seine Stellung gleichzeitig die Richtung des freigegebenen Förderstromes angibt.

Die Klappmulde 7 besteht aus zwei seitlichen Wangen 9, 10 und einer sie verbindenden Querwand 11. Die Rückseite der Querwand 11 ist durch eine weitere Wand 12 zu einer nach aussen zylindrisch konkaven, zur Drehachse konzentrischen Aussenfläche ergänzt worden. Mit dieser zylindrischen Aussenfläche 12 wirken geradlinige Kanten 13 der Verschneidung der beiden Auslassstutzen 3, 4 als Abstreifkante zusammen.

Jede Wange 9 trägt einen Wellenzapfen 15, der in einer zugehörigen Lageröffnung 16 des Gehäuses gelagert ist, vorteilhafterweise mittels einer Lagerbuchse 17 aus Kunststoff. Mit einem der Wellenzapfen ist der Handgriff 8 drehfest verbunden.

Der Rand jeder Wange 9 ist kreisbogenförmig und ergänzt sich mit dem Rand der zylindrischen Rückfläche 12 der Klappmulde zu einem kreisförmig umlaufenden Rand 19, der in einem kreisförmig vertieften Sitz 20 der zugehörigen Gehäusehälfte mit enger Führung aufgenommen ist, so dass durch den engen kreisförmigen Spalt 22 im wesentlichen kein Mahlgut in den Zwischenraum zwischen jeder Wange 9 und der zugehörigen Gehäuseseitenwand 22 eintreten kann. Zwischen Wange 9 und Gehäuseseitenwand 21 ist somit je ein jeden Wellenzapfen 15 umgebender geschützter Raum geschaffen. In jedem dieser Räume ist eine Federanordnung untergebracht, die die Klappmulde in jeder ihrer beiden Endlagen festhält. Bei jedem Umschalten der Klappmulde 7 muss ein Totpunkt der Federanordnung überwunden werden.

Jede dieser Federanordnungen besteht bei dem Ausführungsbeispiel aus einer Biegedrahtfeder, die mittels einer Schraubplatte 25 an der Gehäuseinnenwand befestigt ist, und zwei Biegefederarme 26, 27 bildet, die symmetrisch beiderseits jedes Wellenzapfens 15 liegen. An diesen Biegefederarmen 26, 27 liegen von innen her zwei vorteilhafterweise aus Kunststoff, z.B. Polyamid, bestehende Nockenrollen 28, 29 an, die ebenfalls symmetrisch beiderseits des Wellenzapfens 15 an der Aussenseite jeder Wange 9, 10 gelagert sind. Die Verbindungslinie der Achsen der beiden Rollen 28, 29 verläuft parallel zur Querwand 11 der Klappmulde, und daher haben, wie aus Fig. 3a ersichtlich ist, die Rollen 28, 29 in jeder der beiden Endlagen der Klappmulde 7 eine solche Lage relativ zu den Biegefederarmen 26, 27, dass diese nur wenig gespreizt sind. Beim Umschalten der Klappmulde 7 bewegen sich die Rollen 28, 29 auf Kreisbögen um den Wellenzapfen 15, wodurch die Biegefederarme 26, 27 gespreizt werden. Es muss somit bei jedem Umschalten ein Totpunkt der Federanordnung mit maximaler Rückstellkraft durchlaufen werden.

Da es sich bei der Klappmulde 7, ebenso wie bei den Hälften des Gehäuses 1, vorzugsweise um Spritzgussteile handelt, ist die Querwand der Klappmulde 7 doppelwandig mit innerer Führungswand 11 und zylinderförmiger Rückwand 12 ausgebildet. Der dazwischen befindliche segmentförmige Zwischenraum 31 ist vorzugsweise an beiden Enden durch eingesetzte Blechscheiben 32 verschlossen. Die geradlinige Rückkante 33 jeder seitlichen Wange 9, 10 kann mit einem dreieckigen Anschlag 34 an der Gehäuseinnenwand zusammenwirken, um die beiden Endstellungen der Klappmulde 7 formschlüssig festzulegen.

Aufgrund der Unterbringung jeder Federanordnung in einem der geschlossenen Lagerräume ist die Federanordnung nicht nur gegen den Zutritt von Mahlgut bzw. Fördergut geschützt, sondern es ist auch absolute Sicherheit dafür gegeben, dass bei einem etwaigen Bruch der Feder oder der Nockenrollen keine losen Teile in den Gutstrom gelangen können. Diese Gefahr war bisher der Hauptgrund dafür, dass die Federanordnung grundsätzlich an der Aussenseite des Klappkastens angebracht wurde, da lose Teile, die in den Mahlgutstrom gelangen würden, zu einer Beschädigung der kostspieligen und empfindlichen Walzenstühle und/oder Sichter führen würden.

Die in Fig. 3(a) und 3(b) dargestellte Federanordnung ist auch dann mit Vorteil anwendbar, wenn sie nicht in den Zwischenräumen zwischen den Wangen der Klappmulde und der Innenwandung des Gehäuses angeordnet wird. Da es sich um eine in Achsrichtung der Klappmulde sehr platzsparende Anordnung handelt, kann sie auch an der Aussenseite des Gehäuses angeordnet und z.B. mit einem zusätzlichen Deckel von aussen abgedeckt werden. In diesem Fall würde man die Biegedrahtfeder mit den Federarmen 26, 27 mittels der Schraubplatte 25 an der Aussenseite des Gehäuses 1 anbringen und die mit den Biegefederarmen zusammenwirkenden Rollen 28, 29 ebenfalls an der Aussenseite des Gehäuses auf einer Platte lagern, die auf den an der Gehäuseaussenseite überstehenden Wellenzapfen 15 aufgesetzt und mit ihm drehfest verbunden ist. Das Ganze kann dann mit einem an der Gehäuseaussenseite in geeigneter Weise befestigten Deckel, z.B. aus Plastik, nach aussen abgedeckt und dadurch vor Staub und Beschädigung geschützt werden. Der Vorteil, dass die Federanordnung keine resultierende queraxiale Kraft auf die Drehlagerung der Klappmulde 12 ausübt, bleibt auch bei dieser Anordnung voll erhalten. Zwar ergibt sich bei dieser Anordnung eine geringfügige Vergrösserung der Aussenabmessungen des Klappkastens, dafür ist aber die Federanordnung für Wartung und Reparatur leichter zugänglich als bei der in Fig. 2 dargestellten Anordnung im Inneren des Gehäuses 1.

## Patentansprüche

1. Rohrverzweigung mit Umschaltklappe, insbesondere Klappkasten für Mahlgutleitungen in Mühlenanlagen, mit einem einen Einlassstutzen (2) und zwei Auslassstutzen (3, 4) aufweisenden Gehäuse (1), einer Klappmulde (7), die in dem Gehäuse (1) um eine zu den Achsen der Stutzen (2, 3, 4) senkrechte Drehachse drehbar zwischen zwei jeweils den einen oder anderen Auslassstutzen (3, 4) sperrenden Endlagen drehbar gelagert ist, und einer die Klappmulde (7) in jede Endlage belastenden Federanordnung (26, 27), deren Federkraft beim Schwenken der Klappmulde (7) über einen Totpunkt hinweg zu überwinden ist, wobei die Klappmulde (7) zwei seitliche, von kreisförmigen Sitzen (20) des Gehäuses (1) aufgenommene und je einen Wellenzapfen (15) zum Lagern der Klappmulde (7) tragende Wangen (9, 10) und eine diese verbindende, zur Drehachse parallel verlaufende Querwand (11) aufweist, dadurch gekennzeichnet, dass die Wangen (9, 10) als vollständige Kreisscheiben mit einem kreisförmig umlaufenden Rand (19) ausgebildet sind, der von der kreisförmigen Vertiefung (20) der Gehäusewand unter Bildung eines engen Spaltes (22) derart umschlossen ist, dass der den Wellenzapfen (15) umgebende Zwischenraum zwischen jeder Wange (9) und der Gehäuseseitenwand (21) einen im wesentlichen geschlossenen Lagerraum bildet, und dass in mindestens einem der beiden geschlossenen Lagerräume die Federanordnung (26, 27) angeordnet ist.

2. Rohrverzweigung nach Anspruch 1, dadurch gekennzeichnet, dass die von der Drehachse abgewandte Rückseite (12) der Querwand (11) der Klappmulde (7) eine zur Drehachse konzentrische zylindrische Aussenfläche bildet, mit welcher geradlinige Gehäuseinnenkanten (13) im Bereich der Verschneidung der Auslassstutzen (3, 4) als Abstreifkanten zusammenwirken.

3. Rohrverzweigung nach Anspruch 2, dadurch gekennzeichnet, dass in jedem der beiden geschlossenen Lagerräume je eine Federanordnung (26, 27) angeordnet ist.

4. Rohrverzweigung nach Anspruch 2 oder 3, dadurch gekennzeichnet, dass jede Federanordnung zwei symmetrisch beiderseits der Drehachse der Klappmulde (7) angeordnete Biegefederarme (26, 27) aufweist, die an der Gehäuseinnenwandung (21) befestigt sind und an denen ebenfalls symmetrisch beiderseits des Wellenzapfens (15) an der zugehörigen Wange (9, 10) der Klappmulde (7) angeordnete Nocken (28, 29) anliegen.

5. Rohrverzweigung nach Anspruch 4, dadurch gekennzeichnet, dass die Nocken (28, 29) als drehbar gelagerte Rollen ausgebildet sind.

## Claims

1. A pipe branch with a change-over flap, in particular a flap casing for grinding material ducts in mill installations, with a housing (1) having one inlet connection (2) and two outlet connections (3, 4), with a flap trough (7) which is pivotably mounted in the housing (1) about a pivot axis perpendicular to the axes of the connections (2, 3, 4) and pivotable between two end positions respectively closing one or other of the outlet connections (3, 4), and with a spring assembly (26, 27) which loads the flap trough (7) in each end position and the spring force of which has to be overcome beyond dead centre, when the flap trough (7) is pivoted, the flap trough (7) having two lateral side walls (9, 10) accommodated by circular seatings (20) in the housing (1) and carrying a respective shaft journal (15) for mounting the flap trough (7), and having a transverse wall (11) joining these side walls and extending parallel to the pivot axis, characterised in that the side walls (9, 10) are in the form of complete circular discs with a circular peripheral rim (19) which is surrounded by the circular recess (20) of the housing wall, thus forming a narrow clearance (22), in such a way that the space surrounding the shaft journal (15) between each side wall (9) and the housing end wall (21) forms a substantially closed bearing chamber, and in that the spring assembly (26, 27) is disposed in at least one of the two closed bearing chambers.

2. A pipe branch according to Claim 1, characterised in that on the rear side (12) of the transverse wall (11) of the flap trough (7), remote from the pivot axis, there is formed a cylindrical outer surface which is concentric with the pivot axis and with which straight housing inner edges (13) cooperate as sweeping edges in the vicinity of the intersection of the outlet connections (3, 4).

3. A pipe branch according to Claim 2, characterised in that a spring assembly (26, 27) is disposed respectively in each of the two closed bearing chambers.

4. A pipe branch according to Claim 2 or 3, characterised in that each spring assembly has two flexible spring arms (26, 27) arranged symmetrically on either side of the pivot axis of the flap trough (7), which arms are secured to the housing inner wall (21) and against which are applied abutments (28, 29) likewise disposed symmetrically on either side of the shaft journal (15) on the associated side wall (9, 10) of the flap trough (7).

5. A pipe branch according to Claim 4, characterised in that the abutments (28, 29) take the form of rotatably mounted rollers.

## Revendications

1. Manifold avec robinet à papillon d'inversion, en particulier boîte à robinet à papillon pour conduites de matière moulue dans des installations de minoterie, comprenant une enveloppe (1) qui présente une tubulure d'entrée (2) et deux tubulures de sortie (3, 4), un auget obturateur (7) qui est monté pivotant dans l'enveloppe (1) autour d'un axe de rotation perpendiculaire aux axes des tubulures (2, 3, 4) entre deux positions extrêmes dans lesquelles l'une ou l'autre des tubulures de sortie (3, 4) sont respectivement obturées, et un dispositif à ressort (26, 27) qui sollicite l'auget obturateur (7) dans chaque position extrême et dont la force élastique doit être vaincue pour que l'auget obturateur franchisse un point mort lors de son mouvement pivotant, l'auget obturateur (7) comportant deux parois latérales (9, 10) qui sont reçues dans des sièges circulaires (20) de l'enveloppe (1) et qui portent chacune un tourillon (15) pour le montage de l'auget obturateur, ainsi qu'une paroi transversale (11) qui relie ces parois latérales et s'étend parallèlement à l'axe de rotation, caractérisé en ce que les parois latérales (9, 10) sont réalisées sous forme de disques circulaires complets avec un bord périphérique circulaire (19) qui est emboîté dans la cavité circulaire (20) de la paroi de l'enveloppe avec formation d'une fente étroite (22), de telle manière que l'intervalle entre chaque paroi latérale (9) de l'auget et la paroi latérale (21) de l'enveloppe, entourant le tourillon (15) constitue une chambre de palier pratiquement fermée, et en ce que le dispositif à ressort (26, 27) est placé dans l'une au moins des deux chambres de palier fermées.

2. Manifold selon la revendication 1, caractérisé en ce que la face arrière (12) de la paroi transversale (11) de l'auget obturateur (7), dirigée à l'opposé de l'axe de rotation, constitue une surface extérieure cylindrique, concentrique par rapport à l'axe de rotation, avec laquelle des arêtes intérieures rectilignes de l'enveloppe (13) coopèrent à la manière d'arêtes racleuses dans la région de l'intersection des tubulures de sortie (3, 4).

3. Manifold selon la revendication 2, caractérisé en ce qu'il est disposé un dispositif à ressort (26, 27) dans chacune des deux chambres de palier fermées.

4. Manifold selon la revendication 2 ou 3, caractérisé en ce que chaque dispositif à ressort comporte deux branches de ressort travaillant à la flexion (26, 27) qui sont disposées symétriquement de part et d'autre de l'axe de rotation de l'auget obturateur (7), qui sont fixées à la paroi interne (21) de l'enveloppe et sur lesquelles s'appliquent des saillies (28, 29) qui sont disposées sur la paroi latérale correspondante (9, 10) de l'auget obturateur (7), de façon également symétrique de part et d'autre du tourillon (15).

5. Manifold selon la revendication 4, caractérisé en ce que les saillies (28, 29) sont réalisées sous forme de galets montés à rotation.

Fig. 1

Fig. 3

Fig. 2

(a)

(b)

9